# DEMANDE DE BREVET EUROPEEN

(11) **EP 1 471 269 A2**
(43) Date de publication de la demande: **27.10.2004**
(21) Numéro de dépôt: 04291051.3
(22) Date de dépôt: 22.04.2004
(51) Int. Cl.: F16B 39/14, F16B 21/18

(54) **Dispositif de verrouillage d'un écrou à un axe fileté pour assembler par serrage de l'écrou une pièce à une autre pièce solidaire de cet axe**

(30) Priorité: 23.04.2003 FR 0304968
(71) Demandeur: Simmonds, 72110 Saint Cosme en Vairais (FR)
(72) Inventeur: Cormier, Arnaud Jean Fernand, 72000 Le Mans (FR)
(74) Mandataire: Thinat, Michel

(57) **Abrégé**

La présente invention concerne un dispositif de verrouillage d'un écrou à un axe fileté pour assembler par serrage de l'écrou une pièce à une autre pièce solidaire de cet axe.

Le dispositif est caractérisé en ce qu'il comprend une bague généralement annulaire (7) logée dans un lamage (6) de l'écrou (4) coaxialement à l'axe fileté (3), la bague (7) comportant des moyens (8, 9, 10, 11, 13) permettant de bloquer en rotation l'écrou (4) relativement à l'axe fileté (3) et de retenir axialement la bague (7) relativement à cet axe (3).

L'invention trouve application pour tout domaine d'assemblage de pièces par écrous.

## Description

La présente invention concerne un dispositif de verrouillage d'un écrou à un axe fileté sur lequel est vissé l'écrou pour assembler par serrage de l'écrou une pièce à une autre pièce solidaire de l'axe fileté.

L'utilisation de moyens de verrouillage d'un écrou à son axe fileté pour l'empêcher de se desserrer de cet axe lors de vibrations appliquées à celui-ci est connue depuis longtemps.

Parmi ces moyens, on connaît une goupille traversant l'écrou et l'axe fileté pour immobiliser en position l'écrou à l'axe fileté.

On connaît également l'utilisation de rondelles-freins par exemple du type grower, placées sous l'écrou pour en empêcher le desserrage.

Ces moyens connus ont pour inconvénient, en ce qui concerne les goupilles, d'être peu esthétiques, de nécessiter leur changement à chaque opération de démontage de l'écrou et de provoquer des blessures aux opérateurs par leurs extrémités libre externes, ou, en ce qui concerne les rondelles-freins, de n'être pas suffisamment efficaces pour assurer le verrouillage de l'écrou dans des conditions de vibrations très fortes.

La présente invention a pour but d'éliminer les inconvénients ci-dessus de ces dispositifs connus en proposant un dispositif de verrouillage d'un écrou à un axe fileté sur lequel est vissé l'écrou pour assembler par serrage de l'écrou une pièce à une autre pièce solidaire de l'axe fileté, et qui est caractérisé en ce qu'il comprend une bague généralement annulaire pouvant être logée dans un lamage de l'écrou coaxialement à l'axe fileté et comportant des moyens permettant de bloquer en rotation l'écrou relativement à l'axe fileté pour empêcher son desserrage et de retenir axialement la bague annulaire relativement à l'axe fileté.

Selon un premier mode de réalisation, les moyens de blocage en rotation de l'écrou relativement à l'axe fileté comprennent au moins deux dents radialement externes de la bague annulaire pouvant s'engager respectivement dans deux entailles conjuguées réalisées radialement dans la surface latérale interne du lamage et un segment de disque solidaire de la bague annulaire venant en regard d'un méplat de l'axe fileté.

De préférence, la bague annulaire comprend une pluralité de dents définissant une couronne extérieurement dentée s'engageant dans des entailles conjuguées correspondantes définissant une couronne intérieurement dentée du lamage de l'écrou.

Le moyen de retenue axiale de la bague annulaire comprend au moins deux pattes diamétralement opposées en forme de segments arqués radialement internes solidaires de la bague annulaire et s'engageant élastiquement dans une gorge externe de l'axe fileté.

De préférence, le moyen de retenue comprend quatre pattes en forme de segments arqués deux à deux diamétralement opposées.

Selon un second mode de réalisation, les moyens de blocage en rotation de l'écrou relativement à l'axe fileté sont constitués par une forme externe en polygone régulier de la bague annulaire s'engageant dans une forme conjuguée en polygone régulier de la surface latérale du lamage de l'écrou et par au moins deux pattes diamétralement opposées en forme de segments arqués radialement internes solidaires de la bague annulaire et s'engageant élastiquement dans une gorge externe de l'axe fileté pour constituer en même temps le moyen de retenue axiale de la bague annulaire, chaque segment arqué d'une patte comportant des dents en engrènement avec des dents de la gorge.

De préférence, les moyens de blocage et de retenue comprennent quatre pattes en forme de segments arqués dentés deux à deux diamétralement opposées.

Selon un troisième mode de réalisation, les moyens de blocage en rotation de l'écrou relativement à l'axe fileté sont constitués par une forme externe en polygone régulier de la bague annulaire s'engageant dans une forme conjuguée en polygone régulier de la surface latérale du lamage de l'écrou et au moins deux languettes opposées arquées solidaires de la bague annulaire ayant chacune de leurs extrémités libres élastiquement en engrènement avec des dents réalisées dans une gorge externe de l'axe fileté pour constituer également le moyen de retenue axiale de la bague annulaire.

Selon une variante de réalisation, l'extrémité libre de chaque languette élastique est en forme d'ergot s'engageant entre deux dents consécutives de la gorge de l'axe fileté.

Selon une autre variante de réalisation, l'extrémité libre de chaque languette élastique est coudée en direction de la gorge de l'axe fileté et s'engage entre deux dents consécutives de cette gorge.

De préférence, les languettes élastiques sont diamétralement opposées.

Les dents de la gorge de l'axe fileté sont réalisées par moletage au fond de cette gorge.

La bague annulaire est amoviblement logée dans le lamage de l'écrou après avoir bloqué par serrage l'écrou sur la pièce.

En variante, la bague annulaire est logée de façon imperdable dans le lamage de l'écrou et les pattes ou les languettes de cette bague s'engagent automatiquement dans la gorge de l'axe fileté une fois l'écrou serré sur la pièce ou la bague annulaire est enfoncée manuellement dans le lamage de l'écrou une fois ce dernier serré sur la pièce de manière à engager les pattes ou les languettes dans la gorge de l'axe fileté, suivant la profondeur du lamage et la position axiale de la gorge le long de l'axe fileté.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 est une vue en perspective éclatée d'un dispositif de verrouillage d'un écrou à son axe fileté suivant un premier mode de réalisation de l'invention ;
- la figure 2 est une vue agrandie de la partie cerclée en II de la figure 1 ;
- la figure 3 est une vue en perspective du dispositif de verrouillage de la figure 1 en position assemblée d'immobilisation de l'écrou ;
- la figure 4 est une vue en perspective représentant un second mode de réalisation du dispositif de verrouillage de l'écrou conforme à l'invention ;
- les figures 5A à 5C représentent en perspective les différents composants du dispositif de verrouillage de la figure 4 ;
- la figure 6 est une vue partielle en perspective agrandie de la partie cerclée en VI de la figure 5A ;
- la figure 7 est une vue en perspective éclatée du dispositif de la figure 4 ;
- la figure 8 est une vue en perspective d'un troisième mode de réalisation du dispositif de verrouillage de l'invention ;
- la figure 9 est une vue en perspective de l'un des composants du dispositif de la figure 8 ;
- la figure 10 est une vue en perspective d'un quatrième mode de réalisation du dispositif de verrouillage de l'invention ;
- la figure 11 est une vue en perspective de l'un des composants du dispositif de la figure 10 ;
- la figure 12 est une vue en perspective d'un cinquième mode de réalisation du dispositif de verrouillage de l'invention ;
- la figure 13 est une vue en perspective d'un composant du dispositif de la figure 12 ;
- les figures 14A et 14B sont des demi-vues en coupe longitudinale représentant le mode de verrouillage du dispositif de la figure 12 ;
- la figure 15 est une vue en perspective représentant une variante de réalisation du dispositif de la figure 12 ; et
- les figures 16A et 16B sont des demi-vues en coupe longitudinale représentant le mode de verrouillage du dispositif de la figure 15.

Le dispositif de verrouillage de l'invention va être décrit dans le cadre de l'assemblage d'une pièce en forme de rondelle 1 à une autre pièce 2 telle qu'un arbre cylindrique à l'extrémité duquel doit être fixée la rondelle 1, mais il est bien entendu que ce dispositif peut s'appliquer pour l'assemblage et la fixation l'une à l'autre de pièces différentes.

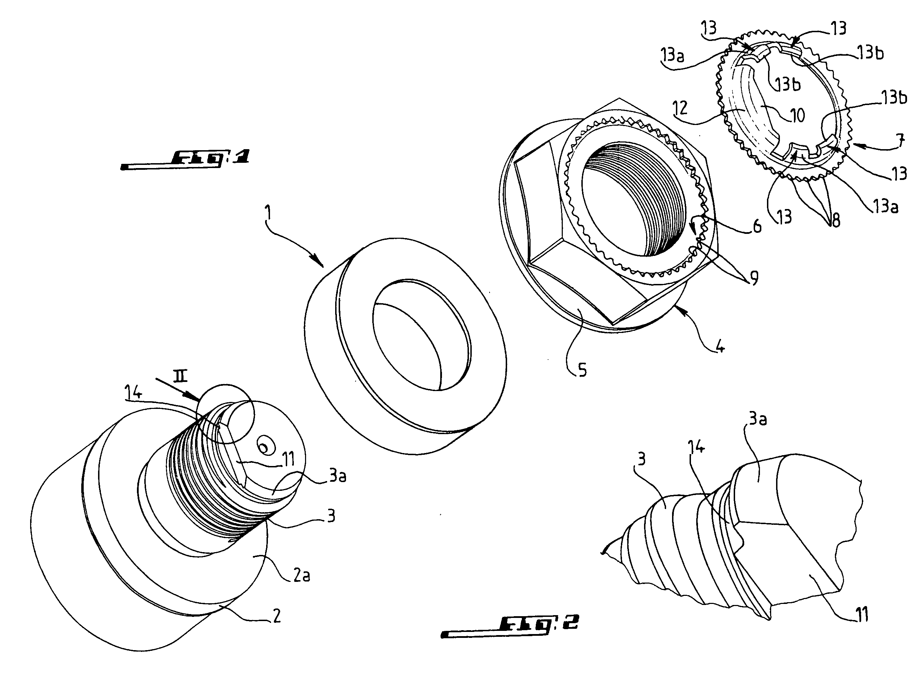

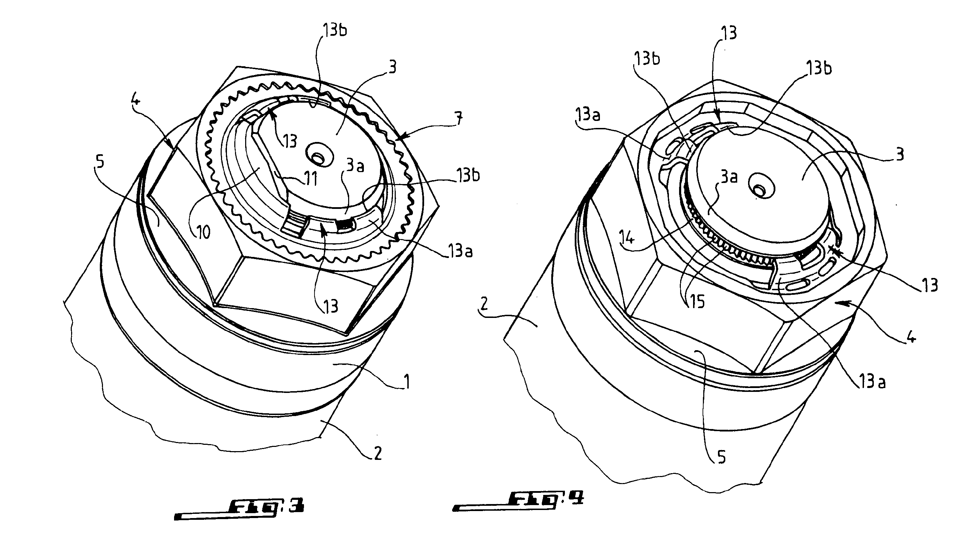

Selon le premier mode de réalisation des figures 1 à 3, la rondelle 1 est montée concentriquement à un axe fileté 3 solidaire coaxialement de l'arbre 2, en venant en appui sur un épaulement 2a de l'arbre 2, et est bloquée en appui sur cet épaulement par serrage sur l'axe fileté 3 de l'écrou 4 à six pans et à embase 5 en appui sur la face externe annulaire de la rondelle 1.

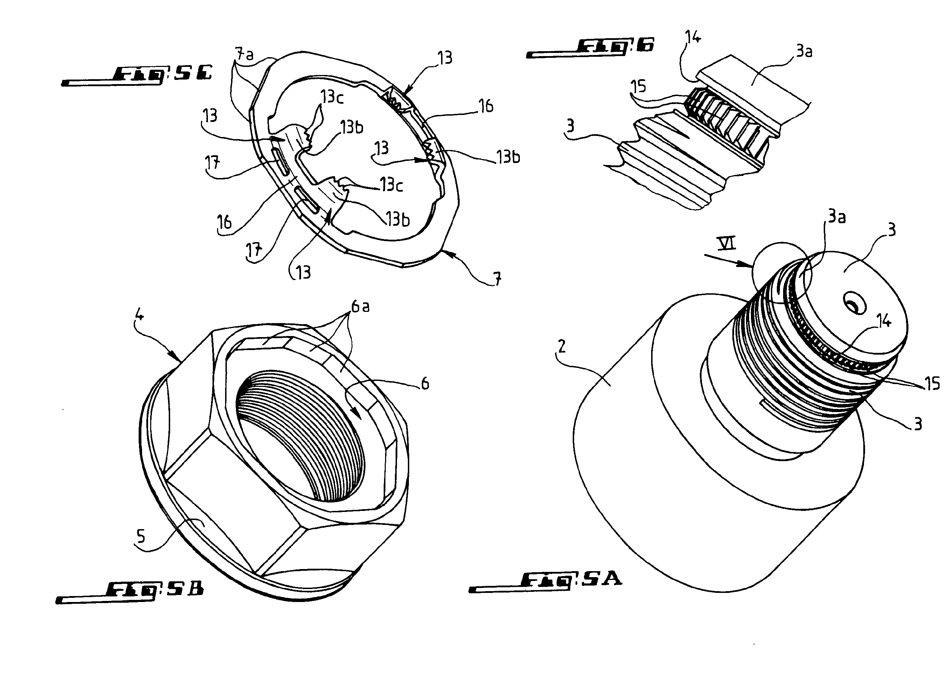

Dans le but d'empêcher le desserrage de l'écrou 4 notamment lors de l'application de vibrations importantes appliquées à l'ensemble assemblé comme représenté en figure 3, l'écrou 4 comprend un lamage 6 de réception d'une bague généralement annulaire 7 pouvant être immobilisée en rotation dans le lamage 6 par des dents externes 8 constituant une couronne extérieurement dentée de la bague 7 en engrènement avec des entailles radiales conjuguées 9 réalisées dans la surface latérale circulaire du lamage 6 pour constituer une couronne intérieurement dentée. Selon une variante de réalisation non représentée, la bague annulaire 7 peut ne comporter que deux secteurs dentés, voir même deux dents, radialement externes 8 et diamétralement opposés pouvant s'engager respectivement dans des entailles radiales 9 de la couronne intérieurement dentée du lamage 6 lorsque l'écrou 4 est bloqué par vissage sur la rondelle 1.

L'immobilisation en rotation de l'écrou 4 relativement à l'axe fileté 3 à sa position vissée de serrage de la rondelle 1 est également assurée par une partie formant segment de disque 10 de la bague 7, solidaire de la face annulaire externe de la bague 7 et pouvant être disposée en regard d'un méplat 11 usiné à l'extrémité de l'axe fileté 3. Le segment de disque 10 est constitué par une paroi solidaire d'une paroi 12 en forme de secteur elle-même solidaire de la face externe de la bague plate 7 perpendiculairement à celle-ci, de manière que la paroi de segment de disque 10 s'étende vers l'intérieur de la bague 7 dans un plan perpendiculaire à l'axe de révolution de la bague 7.

La bague annulaire 7 est retenue axialement dans le lamage 6 par au moins deux pattes diamétralement opposées 13 solidaires de la face externe de la bague 7 et comprenant chacune une partie sensiblement droite 13a formant pied solidaire de la face externe de la bague 7 et qui est prolongée par une partie recourbée 13b en forme de segment arqué s'étendant radialement vers l'intérieur de la bague 7. Les deux parties en forme de segments arqués 13b des pattes 13 s'engagent élastiquement, en position assemblée de la bague 7 dans le lamage 6 avec l'écrou 4 serré sur la rondelle 1, dans une gorge externe 14 de l'axe fileté 3 réalisée au voisinage de son extrémité libre approximativement en-dessous du méplat 11.

De préférence, la bague 7 comprend quatre pattes 13 à segments arqués 13b deux à deux diamétralement opposées, les deux pattes situées d'un même côté étant proches l'une de l'autre.

Le montage du dispositif de verrouillage de l'invention ressort de la description qui précède et va être maintenant expliqué.

Après avoir monté la rondelle 1 en appui sur l'épaulement 2a de la pièce 2 concentriquement à l'axe fileté 3, l'utilisateur serre l'écrou 4 engagé sur la partie filetée correspondante de l'axe 3 jusqu'à bloquer, à l'aide d'une clef appropriée, la rondelle 1 à la pièce 2. Ensuite, l'utilisateur introduit la bague 7 dans le lamage 6 de l'écrou 4 en la positionnant de manière que le segment de disque 10 soit en regard du méplat 11 de l'axe 3, et, en exerçant une pression sur la bague 7, les pattes élastiques 13 se déforment radialement vers l'extérieur pour permettre ensuite l'introduction de leurs segments arqués 13b radialement dans la gorge 14, la couronne extérieurement dentée de la bague 7 étant bien entendu introduite dans la couronne intérieurement dentée du lamage 6 de l'écrou 4.

De la sorte, l'écrou 4 est complètement immobilisé relativement à son axe fileté et ne peut être desserré lorsque soumis à des vibrations importantes.

Pour permettre le desserrage de l'écrou 4, il suffit de désengager élastiquement les pattes 13 de la gorge 14 en exerçant sur elles une pression radialement externe, si nécessaire à l'aide d'un outil approprié, tel qu'un tournevis, et d'extraire par translation la bague 7 hors de son lamage 6.

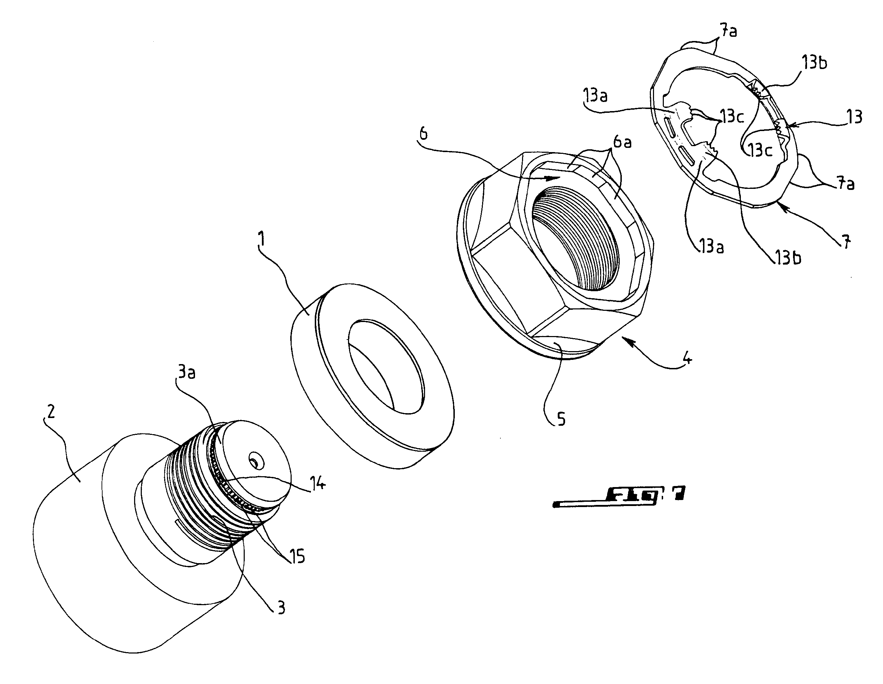

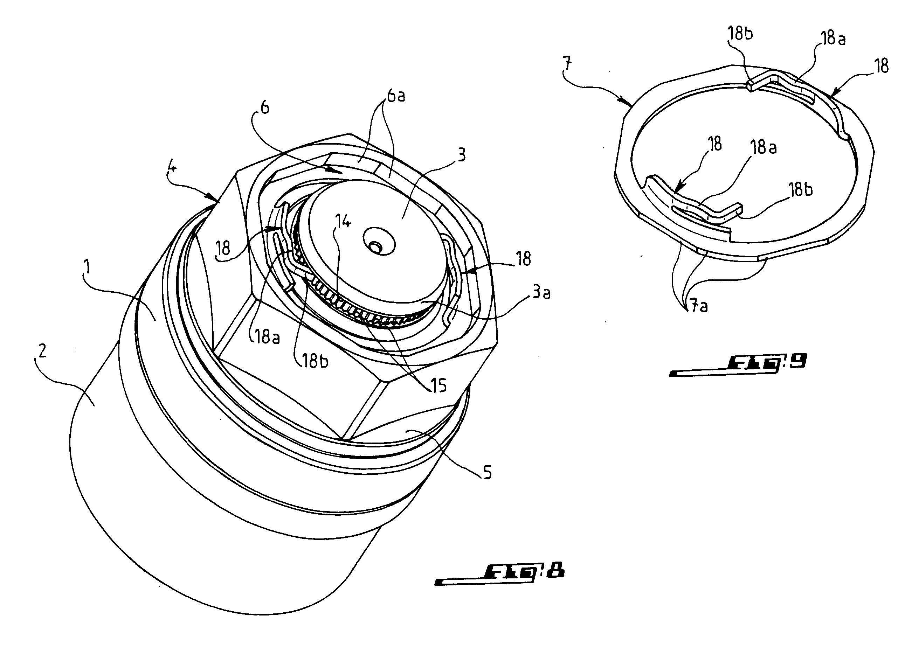

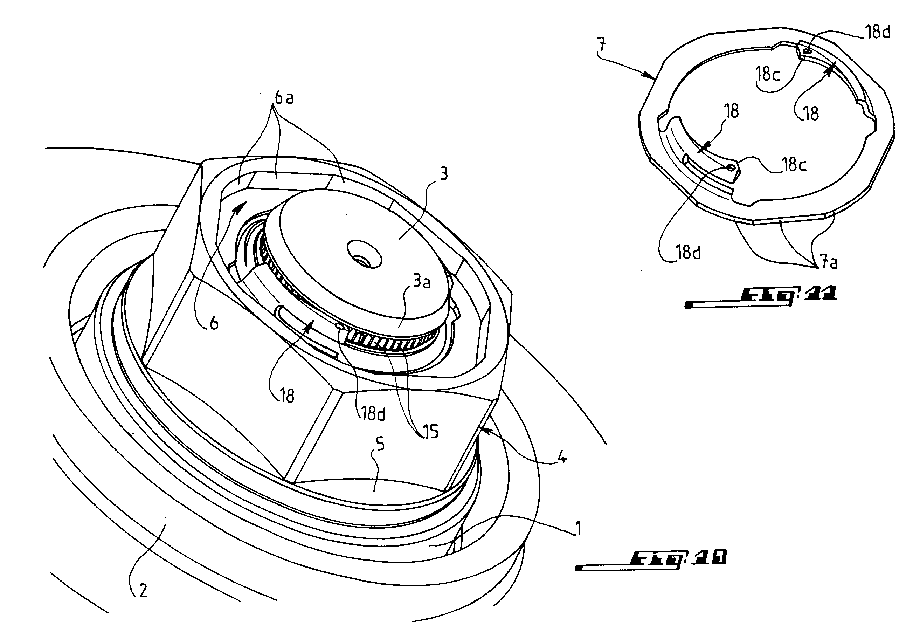

Selon le deuxième mode de réalisation représenté aux figures 4 à 6, les moyens de blocage empêchant le desserrage de l'écrou 4 relativement à l'axe fileté 3 sont tout d'abord constitués par la forme externe en polygone régulier 7a de la bague annulaire 7 s'engageant dans une forme conjuguée en polygone régulier 6a de la surface latérale du lamage 6. Comme représenté aux figures 5B et 5C, les formes de la bague 7 et de la surface latérale du lamage 6 définissent, à titre d'exemple, un dodécagone.

Ces moyens de blocages comprennent en outre au moins deux pattes diamétralement opposées 13 sensiblement identiques aux pattes 13 du premier mode de réalisation, mais dont chaque segment arqué radialement interne 13b comporte à son extrémité libre des dents 13c s'engrenant, lorsque chaque segment arqué 13b est engagé dans la gorge 14 de l'axe 3, avec des dents 15 formées, par exemple par moletage, au fond de la gorge 14. Les pattes radialement élastiques 13, par leurs segments arqués 13b, constituent également le moyen de retenue axiale de la bague 7 relativement à l'axe fileté 3, en s'engageant dans la gorge 14.

De préférence, la bague plate annulaire 7 comporte quatre pattes radialement élastiques 13 deux à deux diamétralement opposées, les deux pattes 13 situées d'un même côté étant voisines l'une de l'autre.

La figure 5C montre en outre que deux pattes voisines 13 sont jumelées par une paroi de liaison 16 solidaire de la face externe de la bague 7 sensiblement perpendiculairement à celle-ci et pour assurer une flexibilité radiale des deux pattes 13, deux lumières circonférentielles, 17 sont réalisées au travers des parties droites des pattes 13 au niveau de leur jonction à la bague 7 et au travers d'une partie de la paroi de liaison 16.

Le montage de l'ensemble représenté en figure 4 s'effectue en vissant tout d'abord l'écrou 4 par la clé appropriée sur l'axe fileté 3 jusqu'à obtenir le couple de serrage souhaité de maintien de la rondelle 1 à la pièce 2. Ensuite, la bague annulaire 7 est introduite dans le lamage de forme conjuguée 6 de l'écrou 4 et enfoncée par pression dans celui-ci jusqu'à ce que les segments arqués 13b des pattes 13 s'engagent élastiquement radialement dans la gorge de l'axe 3, les dents 13c des segments 13b s'engrenant avec les dents 15 de la gorge 14, de manière à immobiliser complètement l'écrou 4 relativement à l'axe 3 pour l'empêcher de se desserrer en cas de vibrations importantes.

Le démontage du dispositif de verrouillage de l'écrou 4 s'effectue tout simplement en écartant élastiquement radialement vers l'extérieur les pattes 13 de la gorge 14 et retirant axialement la bague 7 du lamage 6, l'écartement radial des pattes de verrouillage 13 étant facilité par la présence des lumières 17.

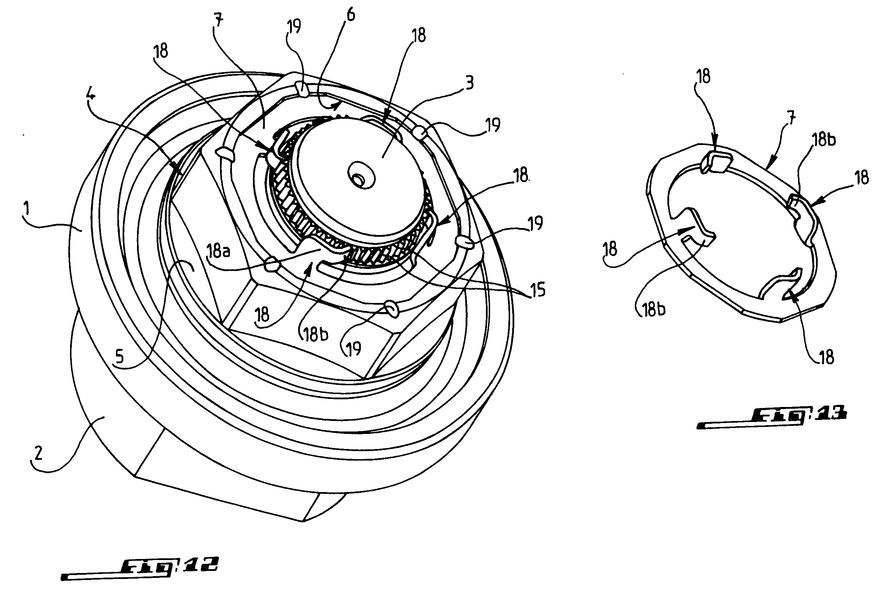

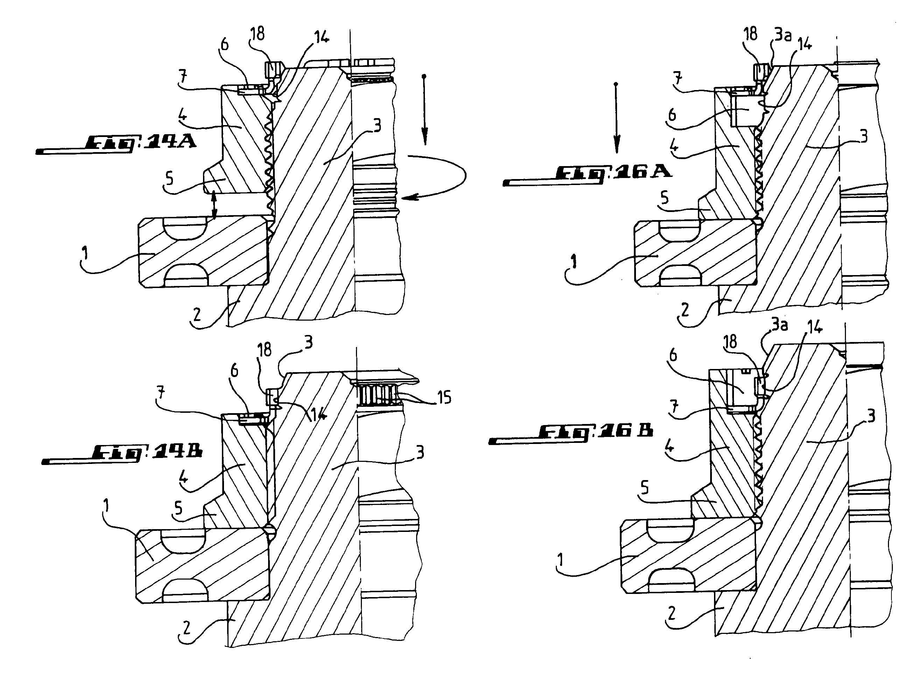

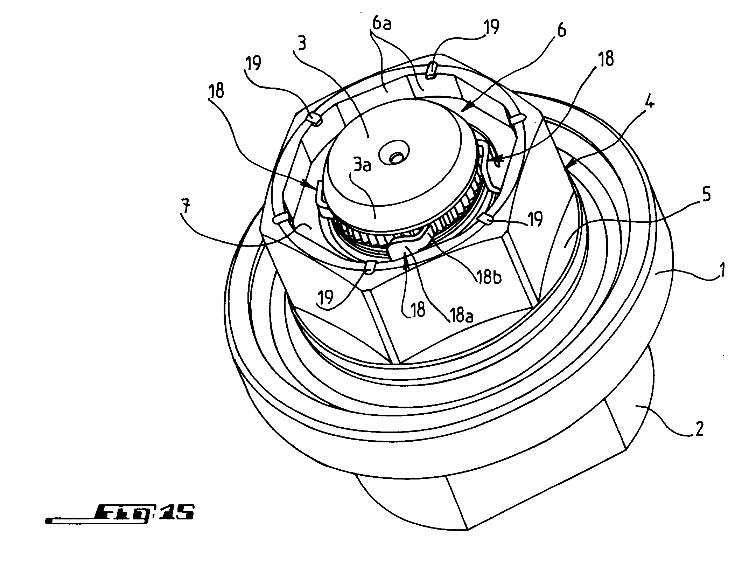

Selon le mode de réalisation représenté aux figures 8 et 9, les moyens de blocage en rotation de l'écrou 4 relativement à l'axe fileté 3 sont constitués d'une part par la forme externe en polygone régulier 7a de la bague annulaire 7 s'engageant dans une forme conjuguée en polygone régulier 6a de la surface latérale du lamage 6 de l'écrou 4 et d'autre part par au moins deux languettes élastiques diamétralement opposées 18 solidaires par l'une de leurs extrémités de la bague 7 au niveau du bord correspondant limitant l'ouverture circulaire interne de la bague 7 et ayant leurs extrémités libres opposées pouvant s'engager élastiquement dans la gorge 14 de l'axe fileté 3 en position montée de la bague 7 dans le lamage 6 de l'écrou 4, chaque extrémité libre d'une languette 18 s'engageant entre deux dents 15 de la gorge 14. Chaque languette élastique 18 comporte une branche arquée 18a s'étendant approximativement en direction circonférentielle de la bague 7 au-dessus de sa face latérale externe et une branche 18b recourbée à l'intérieur de la bague 7 de manière que les extrémités libres des branches recourbées 18b des languettes 18 soient diamétralement opposées.

Après avoir vissé l'écrou 4 à l'axe fileté 3 au couple de serrage de la rondelle 1 à l'arbre 2, la bague annulaire 7 est introduite dans le lamage 6 en polygone régulier de l'écrou 4 et les pattes 18 sont élastiquement écartées radialement vers l'extérieur lors de l'enfoncement de la bague 7 dans le lamage 6 pour permettre l'introduction des extrémités libres des branches courbées 18b dans la gorge 14 entre deux dents consécutives 15 de manière à assurer à la fois le blocage en rotation de l'écrou 4 relativement à l'axe fileté 3 par les branches 18b recourbées dans le sens s'opposant au dévissage de l'écrou 4 lors de vibrations importantes appliquées à celui-ci et le maintien de la bague 7 dans le lamage 6. Comme cela ressort mieux de la figure 9, chaque branche 18a d'une languette 18 est légèrement cintrée à convexité dirigée vers le centre de la bague 7 de manière à exercer un effort radialement interne permettant de maintenir la branche recourbée 18b entre deux dents consécutives 15.

Le retrait de la bague 7 avant desserrage de l'écrou 4 s'effectue en écartant élastiquement les pattes 18 radialement à l'extérieur de la gorge 14 et retirant axialement la bague 7 du lamage 6 de l'écrou 4.

Le mode de réalisation représenté aux figures 10 et 11 ne diffère de celui des figures 8 et 9 que par la forme des languettes radialement élastiques 18 de la bague 7. Ainsi, les deux languettes arquées élastiques 18 s'étendant circonférentiellement dans le même sens ont chacune de leurs extrémités libres 18c en forme d'ergot pouvant s'engager élastiquement dans la gorge 14 entre deux dents consécutives 15 de cette gorge pour, d'une part, empêcher toute rotation de la bague 7 et donc de l'écrou 4 relativement à l'axe fileté 3 et donc empêcher tout desserrage de l'écrou 4 et, d'autre part, retenir la bague 7 dans le lamage 6. Chacune des extrémités des languettes élastiques 18 comporte également un trou traversant 18d permettant l'introduction d'une pointe d'outil pour permettre le désengagement de l'ergot correspondant 18c de la gorge 14.

Après avoir vissé l'écrou 4 au couple de serrage souhaité de fixation de la rondelle 1 à l'arbre 2, l'utilisateur introduit la bague 7 dans le lamage 6 en forme de polygone régulier et les languettes élastiquement déformables 18 s'engagent par encliquetage dans la gorge 14 de manière que leurs ergots respectifs 18c se positionnent entre deux dents consécutives 15 de cette gorge pour bloquer en rotation l'écrou 4 relativement à l'axe fileté 3 et arrêter en translation la bague 7 relativement à cet axe.

Le retrait de la bague 7 s'effectue tout d'abord en écartant radialement et élastiquement vers l'extérieur les deux languettes 18 à l'aide de deux outils en pointe engagés dans les trous 18c de ces languettes pour de la sorte désengager les extrémités des languettes 18 de la gorge 14 et ensuite en extrayant par translation la bague 7 du lamage 6 de l'écrou 4.

L'engagement par encliquetage des pattes 13 et 18 des différents modes de réalisation décrits ci-dessus, lors du montage de la bague 7 dans le lamage 6 de l'écrou 4, peut être facilité par un chanfrein 3a de l'extrémité libre de l'axe fileté 3.

Le mode de réalisation représenté aux figures 12, 13, 14A et 14B diffère de celui des figures 8 et 9 en ce que la bague annulaire 7 comprend quatre languettes élastiques 18 sensiblement identiques à celles de la bague 7 de la figure 9 en étant deux à deux diamétralement opposées et cette bague est logée de façon imperdable dans le lamage 6 de l'écrou 4.

Ainsi, la bague annulaire 7 fait corps avec l'écrou 4 et est retenue axialement dans le lamage 6 par exemple par une pluralité d'ergots 19 solidaires du bord supérieur de la paroi latérale de l'écrou délimitant le lamage 6 en faisant radialement saillie dans ce lamage de manière à être disposés au-dessus de la bague annulaire 7 pour l'empêcher de sortir de ce lamage. Dans le cas présent, les ergots de retenue 19 sont au nombre de six en étant régulièrement espacés, mais il est bien entendu que leur nombre peut différer.

La gorge 14 pourvue du moletage 15 au fond de celle-ci est réalisée juste en dessous du chanfrein 3a de l'extrémité libre de l'axe fileté 3 et le lamage 6 a une profondeur tenant compte de l'épaisseur de la bague annulaire 7 et de la hauteur relativement à cette bague des languettes 18 pour permettre à ces dernières de s'engager automatiquement dans la gorge 14 après avoir bloqué l'écrou 4 sur la rondelle 1.

Les figures 14A et 14B représentent l'opération de vissage de l'écrou 4 à l'aide d'une clé (non représentée) pour entraîner en rotation concomitamment la bague annulaire 7 pour arriver à la position représentée à cette figure à laquelle les languettes 18 ont leurs extrémités en appui sur le chanfrein 3a de l'axe fileté 3, la bague 7 étant en appui sous les ergots radiaux 19 pour être retenue dans le lamage 6. En continuant de visser l'écrou 4 jusqu'au couple de serrage de la rondelle 1 à l'arbre 2 comme représenté en figure 14B, les languettes 18 s'écartent élastiquement radialement de l'axe fileté 3 pour engager ensuite élastiquement radialement dans la gorge 14 de manière que les extrémités libres des branches courbées 18b de ces languettes soient disposées entre deux dents consécutives 15 pour assurer à la fois le blocage en rotation de l'écrou 4 relativement à l'axe fileté 3 pour s'opposer au dévissage de cet écrou lors de vibrations importantes appliquées à celui-ci et le maintien de la bague 7 relativement à l'axe fileté 3.

L'opération de démontage s'effectue en sortant les languettes 18 de la gorge 14 afin de déverrouiller la bague annulaire 7 en rotation et en translation relativement à l'axe fileté 3 et il suffit alors de dévisser l'écrou 4.

Le mode de réalisation des figures 15, 16A et 16B ne diffère de celui des figures 12, 13, 14A et 14B que par des relations dimensionnelles notamment en ce qui concerne la position axiale de la gorge 14 relativement à l'extrémité libre de l'axe fileté 3. Ainsi, la figure 16A montre que la gorge 14 est située à une certaine distance en dessous du chanfrein 3a et par conséquent, pour une bague annulaire 7 identique à celle de la figure 13, le lamage 6 est d'une profondeur supérieure à celle du lamage 6 de la figure 12.

La figure 16A montre que l'écrou 4 a été vissé par une clé appropriée au couple de serrage de la rondelle 1 à l'arbre 2 et les languettes 18 sont en appui par leurs extrémités libres sur le chanfrein 3a de l'axe fileté 3 avec la bague annulaire 7 en appui sous les ergots de retenue axiale 19.

A cette position, il suffit alors d'exercer manuellement une pression sur la bague annulaire 7, si nécessaire à l'aide d'un outil, pour translater la bague 7 le long de l'axe fileté 3 jusqu'à ce que les languettes élastiques 18 s'engagent dans la gorge 14 après avoir été écartées radialement de l'axe fileté 3 lors de l'enfoncement de la bague 7 dans le lamage 6. La figure 16B montre la bague annulaire en position d'immobilisation de l'écrou 4 pour l'empêcher de se desserrer lors de vibrations importantes appliquées à celui-ci.

Le démontage du dispositif de la figure 15 s'effectue en sortant les languettes 18 de la gorge 14 en les écartant radialement vers l'extérieur afin de déverrouiller la bague annulaire 7 en rotation et en translation relativement à l'axe fileté 3 et la bague 7 est déplacée en translation dans le lamage 6 relativement à l'axe fileté 3 à partir de la position représentée dans la figure 16B pour arriver à celle de la figure 16A à laquelle l'écrou 4 peut alors être dévissé.

Les variantes de réalisation des figures 12 et 15 selon lesquelles la bague annulaire 7 est logée de façon imperdable dans le lamage 6 de l'écrou 4 peuvent également être appliquées aux modes de réalisation des figures 4 et 10.

Les ergots radiaux de retenue 19 peuvent être remplacés par tout type de moyen correspondant tel qu'une boursouflure, un rabattement ou repli de matière de la partie supérieure de la paroi latérale de l'écrou définissant le lamage et permettant de retenir axialement la bague annulaire 7 dans ce lamage. Le mode de réalisation des figures 12 et 15 a pour avantage, relativement aux modes de réalisation précédant la figure 12, un montage plus rapide sans se préoccuper de la bague annulaire 7 puisque cette dernière est intégrée à l'écrou 4.

Le dispositif de l'invention faisant l'objet des différents modes de réalisation permet de verrouiller positivement et efficacement l'écrou 4 à son axe fileté 3 pour empêcher tout desserrage de cet écrou dans des conditions sévères de vibrations appliquées à ce dernier. En outre, le montage et le démontage du dispositif de verrouillage s'effectuent très simplement.

## Revendications

1. Dispositif de verrouillage d'un écrou (4) à un axe fileté (3) sur lequel est vissé l'écrou (4) pour assembler par serrage de l'écrou (4) une pièce (1) à une autre pièce (2) solidaire de l'axe fileté (3), **caractérisé en ce qu'**il comprend une bague généralement annulaire (7) pouvant être logée dans un lamage (6) de l'écrou (4) coaxialement à l'axe fileté (3) et comportant des moyens (8, 9, 10, 11, 13 ;13 ; 18) permettant de bloquer en rotation l'écrou relativement à l'axe fileté pour empêcher son desserrage et de retenir axialement la bague annulaire relativement à l'axe fileté.

2. Dispositif selon la revendication 1, **caractérisé en ce que** les moyens de blocage en rotation de l'écrou (4) relativement à l'axe fileté (3) comprennent au moins deux dents radialement externes (8) de la bague annulaire (7) pouvant s'engager respectivement dans deux entailles conjuguées (9) réalisées radialement dans la surface latérale interne du lamage (6) et un segment de disque (10) solidaire de la bague annulaire (7) venant en regard d'un méplat (11) de l'axe fileté (3).

3. Dispositif selon la revendication 2, **caractérisé en ce que** la bague annulaire (7) comprend une pluralité de dents (8) définissant une couronne extérieurement dentée s'engageant dans des entailles conjuguées correspondantes (9) définissant une couronne intérieurement dentée du lamage (6) de l'écrou (4).

4. Dispositif selon l'une des revendications précédentes, **caractérisé en ce que** le moyen de retenue axiale de la bague annulaire (7) comprend au moins deux pattes diamétralement opposées (13) en forme de segments arqués (13b) radialement internes solidaires de la bague annulaire (7) et s'engageant élastiquement dans une gorge externe (14) de l'axe fileté (3).

5. Dispositif selon la revendication 4, **caractérisé en ce que** le moyen de retenue comprend quatre pattes en forme de segments arqués (13) deux à deux diamétralement opposées.

6. Dispositif selon la revendication 1, **caractérisé en ce que** les moyens de blocage en rotation de l'écrou (4) relativement à l'axe fileté (3) sont constitués par une forme externe en polygone régulier de la bague annulaire (7) s'engageant dans une forme conjuguée en polygone régulier de la surface latérale du lamage (6) de l'écrou (4) et par au moins deux pattes diamétralement opposées (13) en forme de segments arqués radialement internes (13b) solidaires de la bague annulaire (7) et s'engageant élastiquement dans une gorge externe (14) de l'axe fileté (3) pour constituer en même temps le moyen de retenue axiale de la bague annulaire (7), chaque segment arqué (13b) d'une patte (13) comportant des dents (13c) en engrènement avec des dents (15) de la gorge (14).

7. Dispositif selon la revendication 6, **caractérisé en ce que** les moyens de blocage et de retenue comprennent quatre pattes (13) en forme de segments arqués dentés (13b) deux à deux diamétralement opposées.

8. Dispositif selon la revendication 1, **caractérisé en ce que** les moyens de blocage en rotation de l'écrou (4) relativement à l'axe fileté (3) sont constitués par une forme externe en polygone régulier de la bague annulaire (7) s'engageant dans une forme conjuguée en polygone régulier de la surface latérale du lamage (6) de l'écrou (4) et au moins deux languettes opposées arquées (18) solidaires de la bague annulaire (7) ayant chacune de leurs extrémités libres élastiquement en engrènement avec des dents (15) réalisées dans une gorge externe (14) de l'axe fileté (3) pour constituer également le moyen de retenue axiale de la bague annulaire (7).

9. Dispositif selon la revendication 8, **caractérisé en ce que** l'extrémité libre de chaque languette élastique (18) est en forme d'ergot (18c) s'engageant entre deux dents consécutives (15) de la gorge (14) de l'axe fileté (3).

10. Dispositif selon la revendication 8, **caractérisé en ce que** l'extrémité libre (18b) de chaque languette élastique (18) est coudée en direction de la gorge (14) de l'axe fileté (3) et s'engage entre deux dents consécutives (15) de cette gorge.

11. Dispositif selon l'une des revendications 8 à 10, **caractérisé en ce que** les languettes élastiques (18) sont diamétralement opposées.

12. Dispositif selon l'une des revendications 6 à 11, **caractérisé en ce que** les dents (15) de la gorge (14) de l'axe fileté (3) sont réalisées par moletage au fond de cette gorge.

13. Dispositif selon l'une des revendications 6 à 12, **caractérisé en ce que** la bague annulaire (7) est amoviblement logée dans le lamage (6) de l'écrou (4) après avoir bloqué par serrage l'écrou sur la pièce (1).

14. Dispositif selon l'une des revendications 6 à 12, **caractérisé en ce que** la bague annulaire (7) est logée de façon imperdable dans le lamage (6) de l'écrou (4) et les pattes (13) ou les languettes (18) de cette bague s'engagent automatiquement dans la gorge (14) de l'axe fileté (3) une fois l'écrou (4) serré sur la pièce (1) ou la bague annulaire (7) est enfoncée manuellement dans le lamage (6) de l'écrou (4) une fois ce dernier serré sur la pièce (1) de manière à engager les pattes (13) ou les languettes (18) dans la gorge (14) de l'axe fileté, (3) suivant la profondeur du lamage (6) et la position axiale de la gorge (14) le long de l'axe fileté (3).
